# EUROPÄISCHE PATENTSCHRIFT

(11) **EP 1 249 626 B1**
(45) Veröffentlichungstag und Bekanntmachung des Hinweises auf die Patenterteilung: **13.01.2010**
(21) Anmeldenummer: 02005190.0
(22) Anmeldetag: 08.03.2002
(51) Int. Cl.: F16D 23/14

(54) **Ausrücklager**
Release bearing
Butée d'embrayage

(30) Priorität: 12.04.2001 DE 10118365
(43) Veröffentlichungstag der Anmeldung: 16.10.2002
(73) Patentinhaber: Schaeffler KG, 91074 Herzogenaurach (DE)
(72) Erfinder: Klöpfer, Bernhard, 91438 Bad Windsheim (DE); Dittmer, Steffen, 91074 Herzogenaurach (DE); Winkelmann, Ludwig, 91056 Erlangen (DE)

(56) Entgegenhaltungen:
- EP-A- 0 913 597
- DE-A- 2 046 282
- DE-A- 19 503 217
- GB-A- 2 080 472
- US-A- 6 126 324

## Beschreibung

### Anwendungsgebiet der Erfindung

Die Erfindung betrifft ein Ausrücklager für eine in Fahrzeugen eingesetzte Schalttrennkupplung, umfassend einen drehstarr angeordneten Lagerring und einen mit der Schalttrennkupplung umlaufenden Lagerring, zwischen denen Wälzkörper geführt sind. Das Ausrücklager ist mit dem drehstarren Lagerring an einem axial verschiebbaren Gehäuse befestigt, wobei das Ausrücklager und das Gehäuse gemeinsam mit einer Betätigungseinrichtung zusammenwirken. Der drehstarre Lagerring ist über einen Ringboden an dem Gehäuse abgestützt. Dabei ist eine Ringschulter des Gehäuses an dem zum Ringboden des Lagerrings gerichteten Seite mit einem Bördelring versehen, welcher gemeinsam mit dem Ringboden eine Kontaktzone bildet.

### Hintergrund der Erfindung

Ein derartiges Ausrücklager ist im eingebauten Zustand aufgrund von Fertigungstoleranzen, insbesondere einem Versatz der Drehachsen der Kupplungstellerfeder und Ausrücklager und aufgrund der Laufeigenschaft einer Brennkraftmaschine, deren Kurbeltrieb Axialschwingungen auslöst, die über die Schalttrennkupplung auf das Ausrücklager übertragen werden, stets einer gewissen Radialbewegung ausgesetzt. Diese Bewegung führt in der Kontaktzone bzw. in dem Gleitbereich zwischen dem Bördelring und dem Ringboden des lagefixierten Lagerrings zu einem erhöhten Verschleiß. Dabei kann es zwischen den bevorzugt aus Stahl hergestellten Bauteilen, dem Bördelring und dem Ringboden des Lagerrings zu Reibrost kommen, der einerseits den Verschleiß verstärkt und die radiale Verschiebekraft erhöht, was sich nachteilig durch den Verschleiß im Kontaktbereich Kupplungstellerfederzungen und Anlaufflansch auswirkt und damit die Gebrauchsdauer des Ausrücklagers reduziert. Bei einem fortschreitenden Verschleiß besteht eine Rissgefahr des Bördelrings, verbunden mit einem Ausfall der Betätigungseinrichtung.

Aus DE 20 46 282 A ist ein Ausrücklager für eine Reibungskupplung bestehend aus einer axial verschiebbaren, radial geführten Hülse, die ein Aufnahmegehäuse für den Außenring eines Kugellagers trägt, dessen Innenring zur Einwirkung auf die Ausrückmittel der Kupplung ausgebildet ist, wobei der Außendurchmesser des Außenringes kleiner als der Innendurchmesser des Aufnahmegehäuses ist, so dass zwischen Außenring und Aufnahmegehäuse ein Spiel für den Ausgleich des Mittenversatzes zwischen Ausrücklager und Kupplung vorhanden ist.

Aus der DE 195 03 217 A1 ist ein Ausrücklager bekannt, welches mit dem Ringboden des äußeren, drehstarren Lagerrings unter Zwischenschaltung eines Bördelrings an der Ringschulter des Gehäuses abgestützt ist. Nachteilig weist diese Anordnung keine Maßnahme auf zur Verringerung der Reibkraft zwischen den Reibepartnern, dem Bördelring und dem Ringboden des Lagerrings.

### Zusammenfassung der Erfindung

Der Erfindung liegt die Aufgabe zu Grunde, die Kontaktzone zwischen dem Ringboden des drehstarren Lagerrings und dem Bördelring zu vergrößern, und damit den Verschleiß der Reibpartner und eine Flächenpressung insbesondere zwischen dem Bördelring und der Ringschulter des Gehäuses zu reduzieren.

Erfindungsgemäß ist eine exakte rechtwinklige Anordnung des mit dem drehstarren Lagerrings verbundenen Ringbodens zu der Symmetrieachse des Gehäuses bzw. des Ausrücklagers vorgesehen, sowie eine Beschichtung zumindest eines Bauteils im Bereich der Kontaktzone.

Die Anordnung sieht vor, dass die Kontaktzone mit einer Winkelabweichung von ≤ ± 1,5° senkrecht bzw. rechtwinkelig zu der Symmetrieachse ausgerichtet ist. Für die Kontaktzone ist eine planparallele Ringflächenbreite von mindestens 2 mm vorgesehen. Diese Maßnahme optimiert, vergrößert in vorteilhafter Weise die Abstützfläche des Ringbodens an dem Bördelring, verbunden mit einer verringerten Flächenpressung, was sich insbesondere auf die Dauerfestigkeit des Bördelrings und der Verringerung der Verschiebekrafterhöhung des Ausrücklagers auswirkt. Die rechtwinklige Anordnung des spanlos hergestellten Lagerrings wird erzielt, in dem der einstückig mit dem drehstarren Lagerring verbundene Ringboden nach dem Tiefziehverfahren mittels eines Planschlagens oder Flachprägens exakt ausgerichtet wird. Diese Maßnahme vergrößert die Anlagefläche und ermöglicht eine plane Anlage des Ringbodens an dem Bördelring.

Alternativ schließt die Erfindung ein Planschleifen bzw. Höhenschleifen ein, mit dem die nicht ebene Kontur des Ringbodens zumindest bereichsweise abgetragen wird, was ebenfalls eine gewünschte vergrößerte Abstützung des Ringbodens an dem Bördelring bewirkt. Dieser Schleifprozess wird vorzugsweise nach der Wärmebehandlung des Ringbodens durchgeführt.

Die gewünschte reduzierte Flächenpressung in der Kontaktzone vermeidet wirksam eine Rissgefahr des Bördelrings und/oder der Ringschulter des Gehäuses. Weiterhin führt diese Maßnahme nicht zu einer erhöhten Verschiebekraft, zur Betätigung der Schalttrennkupplung.

Die Erfindung sieht weiterhin vor, in der Kontaktzone bzw. in dem Gleitbereich der Reibpartner bzw. Abstützpartner zumindest ein Bauteil mit einer reibungsmindernden und / oder verschleißmindernden Beschichtung zu versehen. Die Beschichtung verringert die erforderliche Verschiebekraft des Ausrücklagers gegenüber dem Gehäuse in der Kontaktzone und ermöglicht damit eine verschleißfreie Mikrobewegung der Reibpartner, ohne Gefahr einer Reibrostbildung oder einer Tribokorrosion an den Berührflächen.

Weitere vorteilhafte Ausgestaltungen der Erfindung sind Gegenstand der abhängigen Ansprüche 2 bis 8.

Eine vorteilhafte Ausgestaltung der Erfindung sieht zur gezielten Reduzierung der Tribokorrosion in der Kontaktzone vor, den Bördelring zu beschichten, wobei die Beschichtung bereits auf das Halbzeug, das Band aus dem der Bördelring spanlos gezogen wird, aufgebracht werden kann. Diese Maßnahme verringert die Kosten und ermöglicht dennoch eine wirksame Beschichtung.

Für die Beschichtung des Bördelrings und /oder des Ringbodens eignen sich insbesondere Gleitlacke, d. h. Suspensionen von Festschmierstoffen in Lösungen von anorganischen oder organischen Bindern. Nach dem Aushärten bilden die Gleitlacke einen fest haftenden, trockenen Schmierfilm. Als geeignete Gleitlacke sind Molybdändisulfid, Graphit oder Polytetrafluorethylen verwendbar. Molybdändisulfid eignet sich insbesondere für hohe Oberflächenbelastungen und ist für einen weiten Temperaturbereich einsetzbar und damit prädestiniert zur Beschichtung von Kontaktflächen in Ausrücklagern. Die Schichtdicke des Gleitlacks beträgt für Molybdändisulfid und Graphit 10 bis 15µm und für ein PTFE 2 bis 5µm.

Alternativ zu einer Gleitlackbeschichtung schließt die Erfindung ebenfalls eine verschleißfeste bzw. hochfeste und reibungsarme Kunststoffbeschichtung für zumindest eine Kontaktfläche im Bereich der Kontaktzone der Reibpartner Ringboden und Bördelring ein.

Als eine weitere vorteilhafte Beschichtung eignet sich eine Mangan-Phosphat-Beschichtung am Fertigbauteil des Bördelrings oder des Ringbodens. Eine derartig beschichtetes Bauteil wird anschließend einer Tauchbeölung unterzogen, wobei das Öl vorzugsweise einen Korrosionsschutzzusatz aufweist. Dabei handelt es sich um eine preiswerte, einfach aufzubringende Beschichtung, die direkt nach dem spanlosen Herstellprozess auf die Kontaktfläche aufgebracht werden kann. Die Beschichtung sorgt gleichzeitig für eine Konservierung der Bauteile bis zur Montage. Durch das in der aufgerauten Mangan-Phosphatschicht eingebettete Öl kommt es zu keiner Ölverschleppung bzw. Verschmutzung der Montageeinrichtungen. Im Betriebszustand sorgt die Mangan-Phosphatbeschichtung für eine ausreichende Trennung der metallischen Kontaktfläche und wirkt somit verschleißmindernd in Verbindung mit einer gewünschten verringerten Verschiebekraft bei einer hohen Gebrauchsdauer.

Gemäß einer weiteren Ausgestaltung der Erfindung ist vorgesehen, den Bördelring aus einem vergüteten Stahlband herzustellen. Dazu eignet sich insbesondere der Werkstoff C17M V. Dieser Werkstoff ist ziehtechnisch verarbeitbar und bedarf aufgrund seiner Grundhärte keiner Wärmebehandlung. Durch den Wegfall der Wärmebehandlung ergibt sich ein Kostenvorteil. Gleichzeitig besteht keine Gefahr einer nachteiligen Oberflächenveränderung, beispielsweise eine Verzunderung sowie ein bei der Wärmebehandlung häufig auftretender Verzug des Bauteils.

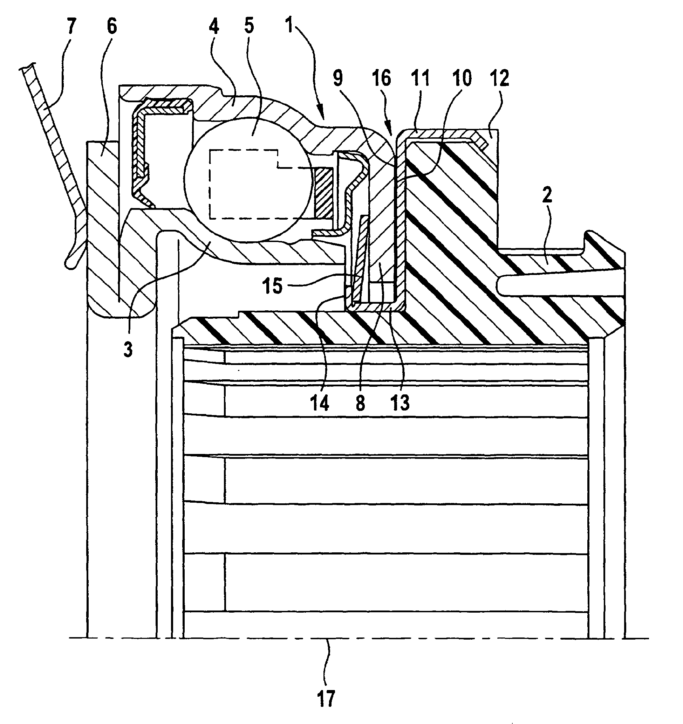

### Kurze Beschreibung der Zeichnung

Weitere Merkmale der Erfindung ergeben sich aus der Zeichnung, die ein Ausführungsbeispiel der Erfindung darstellt. In der nachfolgenden Figurenbeschreibung wird die Zeichnung näher erläutert.

### Detaillierte Beschreibung der Zeichnung

Nach der einzigen Figur ist das im Halbschnitt dargestellte Ausrücklager 1 im eingebauten Zustand mit einem Gehäuse 2 kombiniert. Das als Schrägschulterlager konzipierte Ausrücklager 1 umfasst einen umlaufend angeordneten inneren Lagerring 3 sowie einen äußeren drehstarr angeordneten Lagerring 4, zwischen denen Wälzkörper 5 geführt sind. An dem Ringboden 6 des inneren Lagerrings 3 ist ein mit einer nicht abgebildeten Schalttrennkupplung in Verbindung stehendes Federmittel 7 abgestützt. Der äußere Lagerring 4 bildet einen radial nach innen gerichteten Ringflansch 8, dessen Kontaktfläche 9 an einer zugehörigen Kontaktfläche 10 des Bördelrings 11 anliegt. Der Bördelring 11 deckt dabei eine Ringschulter 12 das Gehäuse 2 teilweise ab und ist an dem Gehäuse 2 mittels eines außenseitigen Umgriffs an der Ringschulter 12 verdrehgesichert befestigt.

Der Bördelring 11 ist innenseitig mit einer axial vorstehenden U-förmig gestalteten Aufnahme 13 bzw. Bund versehen, welche endseitig durch einen Bord 14 oder Bördelbord begrenzt ist. An dem Bord 14 stützt sich die Tellerfeder 15 ab, welche außenseitig unter Vorspannung an dem Ringboden 8 des äußeren Lagerringes 4 anliegt, zur Erzielung einer kraftschlüssigen Abstützung des Ringbodens 8 an dem Bördelring 11. Die Kontaktflächen 9, 10 der Reibpartner Ringboden 8 und Bördelring 11 bilden die Kontaktzone 16. Im eingebauten Zustand ist die Kontaktzone 16 rechtwinklig mit einer nur geringen zulässigen Abweichung zu der Symmetrieachse 17 des Gehäuses 2 und des Ausrücklagers 1 ausgerichtet, wodurch sich eine optimale großflächige Abstützung des Ringbodens 8 an dem Bördelring 11 ergibt. Damit verbunden verringert sich die Flächenpressung an dem Bördelring 11, was sich vorteilhaft auf die radiale Verschiebekraft des Ausrücklagers, den Verschleiß und die Lebensdauer der Reibpartner auswirkt. Gleichzeitig wird die partielle plastische Deformation an dem Kontaktbereich zwischen dem Bördelring 10 und der Ringschulter 12 des Gehäuses 2 verhindert und die Rißgefahr des Bördelrings 11 verringert.

### Bezugszahlen

- 1: Ausrücklager
- 2: Gehäuse
- 3: Lagerring (innen)
- 4: Lagerring (außen)
- 5: Wälzkörper
- 6: Ringboden
- 7: Federmittel
- 8: Ringboden
- 9: Kontaktfläche (Ringboden)
- 10: Kontaktfläche (Bördelring)
- 11: Bördelring
- 12: Ringschulter (Gehäuse)
- 13: Aufnahme
- 14: Bord
- 15: Tellerfeder
- 16: Kontaktzone
- 17: Symmetrieachse

## Patentansprüche

1. Ausrücklager (1) für eine in Fahrzeugen eingesetzte Schalttrennkupplung, das einen drehstarr angeordneten und einen umlaufend angeordneten Lagerring (3, 4) umfasst, zwischen denen Wälzkörper (5) geführt sind und das Ausrücklager (1) mit einem axial verschiebbaren, eine Ringschulter (12) aufweisenden Gehäuse (2) zusammenwirkt, die gemeinsam einer Betätigungseinrichtung zugehören, wobei das Ausrücklager (1) mit einem Ringboden (6) des umlaufenden Lagerrings (3) an einem Federmittel (7) der Schalttrennkupplung abgestützt ist und ein Ringboden (8) des drehstarren Lagerrings (4) mittelbar über einen Bördelring (11) an der Ringschulter (12) des Gehäuses (2) anliegt, **dadurch gekennzeichnet, dass** der Bördelring (11) und der Ringboden (8) des drehstarren Lagerrings (4) in einer Kontaktzone (16) rechtwinklig mit einer Abweichung von ≤ ± 1,5 Grad zu einer Symmetrieachse (17) des Ausrücklagers (1) bzw. des Gehäuses (2) ausgerichtet sind und zumindest eine Kontaktfläche (9, 10) des Ringbodens (8) oder des Bördelrings (11) in der Kontaktzone (16) beschichtet ist.

2. Ausrücklager nach Anspruch 1, wobei die Kontaktzone (16) eine planparallele Ringfläche bildet, deren Breite zumindest 2 mm beträgt.

3. Ausrücklager nach Anspruch 1, wobei für die Beschichtung einer Kontaktfläche (9, 10) ein Gleitlack, wie Molybdändisulfid (MoS₂) Grafit oder Polytetraflourethylen (PTFE) vorgesehen ist.

4. Ausrücklager nach Anspruch 1, wobei eine Kontaktfläche (9, 10) mit einem verschleißfesten bzw. hochfesten und reibungsarmen Kunststoff beschichtet ist.

5. Ausrücklager nach Anspruch 1, wobei eine Mangan-Phosphat (MnPh)-Beschichtung mit einer anschließenden Beölung der Kontaktfläche (9, 10) vorgesehen ist.

6. Ausrücklager nach Anspruch 1, wobei zumindest eine Kontaktfläche (9, 10) in dem Kontaktbereich (16) des Ausrücklagers (1) mit einem hochtemperaturfesten Schmierstoff benetzt ist.

7. Ausrücklager nach Anspruch 6, wobei ein mit Haftzusätzen versehener Schmierstoff für die Benetzung der Kontaktfläche (9, 10) verwendet wird.

8. Ausrücklager nach Anspruch 1, wobei der Bördelring (11) aus einem vergüteten Bandmaterial, beispielsweise C17M V hergestellt ist.

## Claims

1. Release bearing (1) for a separating clutch used in vehicles, which release bearing (1) comprises one rotationally fixedly arranged and one rotating bearing ring (3, 4), between which are guided rolling bodies (5), and the release bearing (1) interacts with an axially movable housing (2) which has an annular shoulder (12) and said release bearing (1) and housing (2) together belong to an actuating device, with the release bearing (1) being supported with an annular base (6) of the rotating bearing ring (3) against a spring means (7) of the separating clutch, and with an annular base (8) of the rotationally fixed bearing ring (4) bearing indirectly via a flanged ring (11) against the annular shoulder (12) of the housing (2), **characterized in that,** in a contact zone (16), the flanged ring (11) and the annular base (8) of the rotationally fixed bearing ring (4) are aligned at right angles, with a deviation of ≤ ± 1.5 degrees, to an axis of symmetry (17) of the release bearing (1) and of the housing (2), and at least one contact surface (9, 10) of the annular base (8) or of the flanged ring (11) is coated in the contact zone (16).

2. Release bearing according to Claim 1, with the contact zone (16) forming a plane-parallel annular surface with a width of at least 2 mm.

3. Release bearing according to Claim 1, with a sliding lacquer, such as molybdenum sulphide (MoS₂) graphite or polytetrafluoroethylene (PTFE) being provided for the coating of a contact surface (9, 10).

4. Release bearing according to Claim 1, with a contact surface (9, 10) being coated with a wear-resistant and/or high-strength and low-friction plastic.

5. Release bearing according to Claim 1, with a manganese phosphate (MnPh) coating with subsequent oiling of the contact surface (9, 10) being provided.

6. Release bearing according to Claim 1, with at least one contact surface (9, 10) being wetted with a high-temperature-resistant lubricant in the contact region (16) of the release bearing (1).

7. Release bearing according to Claim 6, with a lubricant which is provided with adhesion additives being used for wetting the contact surface (9, 10).

8. Release bearing according to Claim 1, with the flanged ring (11) being produced from a tempered strip material, for example C17M V.

## Revendications

1. Palier de débrayage (1) pour un embrayage de séparation utilisé dans des véhicules, qui comprend une bague de palier (4) disposée de manière rigide en rotation et une bague de palier disposée à rotation (3), entre lesquelles sont guidés des corps de roulement (5), la palier de débrayage (1) coopérant avec un boîtier (2) déplaçable axialement, présentant un épaulement annulaire (12), qui appartiennent ensemble à un dispositif d'actionnement, la palier de débrayage (1) étant supporté avec un fond annulaire (6) de la bague de palier périphérique (3) sur un moyen de ressort (7) de l'embrayage de séparation et un fond annulaire (8) de la bague de palier (4) rigide en rotation s'appliquant de manière indirecte par le biais d'une bague de bordage (11) contre l'épaulement annulaire (12) du boîtier (2), **caractérisé en ce que** la bague de bordage (11) et le fond annulaire (8) de la bague de palier (4) rigide en rotation sont orientés dans une zone de contact (16) à angle droit avec un écart de ≤ ± 1,5 degré par rapport à un axe de symétrie (17) du palier de débrayage (1) ou du boîtier (2) et au moins une surface de contact (9, 10) du fond annulaire (8) ou de la bague de bordage (11) est pourvue d'un revêtement dans la zone de contact (16).

2. Palier de débrayage selon la revendication 1, dans lequel la zone de contact (16) forme une surface annulaire plan-parallèle, dont la largeur vaut au moins 2 mm.

3. Palier de débrayage selon la revendication 1, dans lequel, pour le revêtement d'une surface de contact (9, 10), on prévoit un vernis glissant, comme du sulfure de molybdène (MoS₂), du graphite ou du polytétrafluoroéthylène (PTFE).

4. Palier de débrayage selon la revendication 1, dans lequel une surface de contact (9, 10) est pourvue d'un revêtement de plastique résistant à l'usure, ou hautement résistant et à faible friction.

5. Palier de débrayage selon la revendication 1, dans lequel un revêtement de manganèse-phosphate (MnPh) est pourvu d'un huilage subséquent de la surface de contact (9, 10).

6. Palier de débrayage selon la revendication 1, dans lequel au moins une surface de contact (9, 10) est mouillée dans la région de contact (16) du palier de débrayage (1) avec un lubrifiant résistant aux hautes températures.

7. Palier de débrayage selon la revendication 6, dans lequel un lubrifiant pourvu de promoteurs d'adhésion est utilisé pour mouiller la surface de contact (9, 10).

8. Palier de débrayage selon la revendication 1, dans lequel la bague de bordage (11) se compose d'un matériau en bande amélioré par exemple de C17M V.
